# EUROPEAN PATENT APPLICATION

(11) **EP 4 624 018 A1**
(43) Date of publication of application: **01.10.2025**
(21) Application number: 24167003.3
(22) Date of filing: 27.03.2024
(51) Int. Cl.: B01D 39/18

(54) **IMPREGNATED FILTER MEDIUM**

(71) Applicant: Neenah Gessner GmbH, 83052 Bruckmühl (DE)
(72) Inventor: HÖRL, Werner Dr., Bruckmühl (DE); FRITZE, Fabian Dr., Bruckmühl (DE)
(74) Representative: Haseltine Lake Kempner LLP

(57) **Abstract**

Described herein is a filter medium comprising a base filter medium impregnated with a cured epoxy resin formed by the reaction of an epoxy resin with a curing agent, wherein the epoxy resin comprises a diglycidyl ether formed by the reaction of a diol with an epihalohydrin; wherein at least the epihalohydrin is derived from renewable sources. Also described herein is a filtration device formed therefrom and a method of producing a filter medium.

## Description

The present disclosure relates to filter media and methods of making filter media from renewable sources.

### BACKGROUND OF THE INVENTION

Filtration systems have uses in many fields. They are typically used to remove undesirable materials from a fluid (e.g., a liquid or gas) by passing the fluid through a filter medium. A filter medium has a number of different properties including thickness, basis weight, dust holding capacity, filter efficiency, permeability, pore size, and mechanical properties such as burst strength, tensile strength and elongation at break. It is often desirable to improve one property of a filter medium so that it is particularly suited to a use in a particular filtration process or system. However, improving any property of the filter medium may adversely affect one or more of the other properties.

In most filtration systems, the filter medium is a consumable part of the system as long-term use of a filter medium generally reduces its effectiveness at removing undesirable materials from a fluid. Indeed, a filter medium used for depth filtration contains torturous pathways through the filter medium that retain particles of the undesirable material within the filter medium. Thus, a depth filtration filter medium must be replaced periodically because the pores within the filter medium become blocked over time reducing fluid flow through the filtration system. While filter media used in surface filtration tend to have a longer useable lifespan (because the undesirable particles are trapped at the surface of the filter medium, allowing periodic cleaning of the filter medium to remove the particles), these filter media still need to be replaced periodically.

Unfortunately, many of the components of filter media are produced from fossil fuels. In particular, the polymeric resins used to impregnate the base filter medium are generally produced from fossil fuels. In view of the consumable nature of filter media, the use of fossil fuels to produce filter media is undesirable.

WO 2022/008614 discloses filtration media comprising a fibrous web impregnated with a resin composition comprising lignin. The fibrous web comprises the lignin in an amount of from 0.1 to 30 wt.% by weight of the fibrous web; and the lignin has a density of less than 1.2 g/cm or a weight average molecular weight of less than 20000 g/mol when measured according to ASTM D4001-13 standard. While the filtration medium described in WO 2022/008614 involves impregnation with a resin composition that can be produced from renewable sources, the resin composition does not provide a filtration medium with suitable properties for use in all filtration systems.

Although this filter medium allows the environmental impact of replacing certain filter media to be reduced, it cannot be used in all filtration systems. Consequently, it is desirable to produce other filter media that maintain or improve the properties of current filter media whilst also reducing the environmental impact of replacing the filter medium within the system.

### SUMMARY OF THE INVENTION

In an aspect, there is provided a filter medium. The filter medium comprises a base filter medium impregnated with a cured epoxy resin. The cured epoxy resin is formed by the reaction of an epoxy resin with a curing agent. The epoxy resin comprises a diglycidyl ether formed by the reaction of a diol with an epihalohydrin. At least the epihalohydrin is derived from renewable sources.

In another aspect, there is provided a filtration device. The filtration device comprises the filter medium described herein. In some examples, the filtration device may comprise or be a gas filter, an air intake filter, or a liquid filter, such as a lube oil filter, fuel filter or hydraulic filter.

In a further aspect, there is provided an air intake filtration device for automotive air filtration comprising a filter medium described herein.

In another aspect, there is provided a method of producing a filter medium. The method of producing a filter medium comprises impregnating a base filter medium with an epoxy resin and a curing agent; and reacting the epoxy resin with the curing agent to form a cured epoxy resin. The epoxy resin may be any epoxy resin described herein. For example, the epoxy resin comprises a diglycidyl ether formed by the reaction of a diol with an epihalohydrin; the epihalohydrin derived from renewable sources.

The present inventors have found that the proportion of carbon from renewable sources can be increased by impregnating the base filter medium with an epoxy resin of the type described herein without detrimentally affecting the filtration properties of the filter medium. Indeed, in such filter media the dry and wet bursting strength, dry and wet stiffness, elongation at break and chemical resistance to filtration fluids are not detrimentally affected by the resin described herein. Moreover, epoxy resins are hydrophobic and may not require additional steps to cure the resin.

### DETAILED DESCRIPTION OF THE INVENTION

Before the present disclosure is disclosed and described, it is to be understood that this disclosure is not limited to the particular process steps and materials disclosed herein because such process steps and materials may vary somewhat. It is also to be understood that the terminology used herein is used for the purpose of describing particular embodiments. The terms are not intended to be limiting because the scope is intended to be limited by the appended claims and equivalents thereof.

It is noted that, as used in this specification and the appended claims, the singular forms "a," "an," and "the" include plural referents unless the context clearly dictates otherwise.

As used herein, "co-polymer" refers to a polymer that is polymerized from at least two monomers.

If a standard test is mentioned herein, unless otherwise stated, the version of the test to be referred to is the most recent at the time of filing this patent application.

As used herein, "NVS" is an abbreviation of the term "non-volatile solids".

As used herein, the term "about" is used to provide flexibility to a numerical range endpoint by providing that a given value may be a little above or a little below the endpoint to allow for variation in test methods or apparatus. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the limits of the range, but also to include all the individual numerical values or sub-ranges encompassed within that range as if each numerical value and sub-range is explicitly recited. As an illustration, a numerical range of "about 1 wt% to about 5 wt%" should be interpreted to include not just the explicitly recited values of about 1 wt% to about 5 wt%, but also to include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.

As used herein, unless otherwise stated, wt.% values are to be taken as referring to a weight-for-weight (w/w) percentage of the composition, and including the weight of any fluid present.

Unless otherwise stated, any feature described herein can be combined with any aspect or any other feature described herein.

### Filter Medium

In an aspect, there is described a filter medium. The filter medium comprises a base filter medium impregnated with a cured epoxy resin formed by the reaction of an epoxy resin with a curing agent, wherein the epoxy resin comprises a diglycidyl ether formed by the reaction of a diol with an epihalohydrin; and wherein at least the epihalohydrin is derived from renewable sources.

The base filter medium impregnated with the cured epoxy resin may be referred to herein as a saturated filter medium. In some examples, the filter medium comprises at least about 5 wt.% cured epoxy resin based on the total weight of the saturated filter medium, for example, at least about 10 wt.%, at least about 15 wt.%, at least about 20 wt.%, at least about 25 wt.%, at least about 30 wt.%, or at least about 35 wt.% cured epoxy resin based on the total weight of the saturated filter medium. In some examples, the filter medium comprises up to about 35 wt.% cured epoxy resin based on the total weight of the saturated filter medium, for example, up to about 30 wt.%, up to about 25 wt.%, up to about 20 wt.%, up to about 15 wt.%, up to about 10 wt.%, or up to about 5 wt.% cured epoxy resin based on the total weight of the saturated filter medium. In some examples, the filter medium comprises from about 5 wt.% to about 35 wt.% cured epoxy resin based on the total weight of the saturated filter medium, for example, from about 10 wt.% to about 30 wt.%, about 15 wt.% to about 25 wt.%, or about 20 wt.% to about 25 wt.% cured epoxy resin based on the total weight of the saturated filter medium.

In some examples, the filter medium comprises at least about 65 wt.% base filter medium based on the total weight of the saturated filter medium, for example, at least about 70 wt.%, at least about 75 wt.%, at least about 80 wt.%, at least about 85 wt.%, at least about 90 wt.%, or at least about 95 wt.% base filter medium based on the total weight of the saturated filter medium. In some examples, the filter medium comprises at least about up to about 95 wt.% base filter medium based on the total weight of the saturated filter medium, for example, up to about 90 wt.%, up to about 85 wt.%, up to about 80 wt.%, up to about 75 wt.%, up to about 70 wt.%, or up to about 65 wt.% wt.% base filter medium based on the total weight of the saturated filter medium. In some examples, the filter medium comprises from about 65 wt.% to about 95 wt.% base filter medium based on the total weight of the saturated filter medium, for example, from about 70 wt.% to about 90 wt.%, about 75 wt.% to about 85 wt.%, or about 80 wt.% to about 85 wt.% base filter medium based on the total weight of the saturated filter medium.

In some examples, the base filter medium comprises a first surface and a second surface, the first surface opposing the second surface. In some examples, the first surface of the base filter medium and the second surface of the base filter medium are impregnated with the cured epoxy resin. In some examples, the cured epoxy resin has impregnated throughout the base filter medium.

In some examples, the filter medium comprises a base filter medium impregnated with a cured epoxy resin. The cured epoxy resin is formed by the reaction of the epoxy resin with the curing agent. The cured epoxy resin may comprise a cross-linked matrix formed by the reaction of the epoxy resin with the curing agent. In some examples, the epoxy resin may be any epoxy resin described herein and the curing agent may be any curing agent described herein.

### Epoxy Resin

The epoxy resin comprises a diglycidyl ether formed by the reaction of a diol with an epihalohydrin, wherein the epihalohydrin is derived from renewable sources. In some examples, the epoxy resin comprises a polymeric diglycidyl ether. The epoxy resin may comprise a diglycidyl ether terminated polyol.

In some examples, the diglycidyl ether may be an aliphatic diglycidyl ether, an aromatic diglycidyl ether or a combination thereof. In some examples, the diglycidyl ether may be an aromatic diglycidyl ether.

In some examples, the epoxy resin comprises or consists of a diglycidyl ether with formula (I): 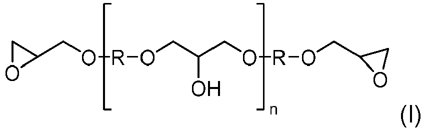 wherein each R may be independently selected from alkylene functional groups, arylene functional groups, alkarylene functional groups, aralkylene functional groups, arylene-alkylene-arylene functional groups or a combination thereof. In some examples, R is an arylene-alkylene-arylene functional group. In some examples, R is selected from -Ph-C(CH₃)₂-Ph-, -Ph-C(CH₃)(Ph)-Ph-, -Ph-C(CF₃)₂-Ph, -Ph-C(CH₃)(CH₂CH₃)-Ph-, -Ph-C(Ph)₂-Ph-, -Ph(CH₃)-C(CH₃)₂-Ph(CH₃)-, -Ph-CH(CH₃)-Ph-, -Ph-CH₂-Ph-, or a combination thereof. In some examples, each R may be the same or different. In some examples, each R is the same. In some examples, R is -Ph-C(CH₃)₂-Ph-, -Ph-CH₂-Ph- or a combination thereof. In some examples, R is -Ph-C(CH₃)₂-Ph-.

In some examples, n is an integer of from 0 to 5, for example, 1, 2, 3, 4 or 5. In some examples, n is preferably 1, 2 or 3. In some examples, n is preferably 2 or 3. In some examples, the epoxy resin comprises a mixture of compounds in which n is, for example, 2 and 3. In some examples, the epoxy resin comprises a mixture of compounds with different molecular weights due to different numbers of repeating units such that the average value of n is not an integer.

In some examples, the epoxy resin comprises or consists of a diglycidyl ether with formula (II): 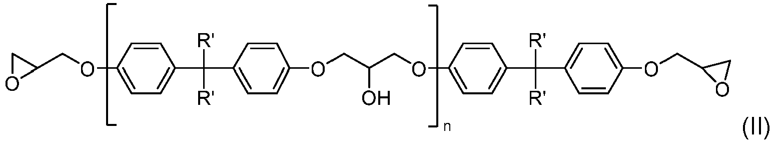 wherein each R' is independently selected from hydrogen, alkyl (e.g., C1 to C6 alkyl), aryl (e.g., phenyl), or a combination thereof. In some examples, each R' is hydrogen or alkyl (e.g., C1 to C6 alkyl). In some examples, each R' is hydrogen or methyl. In some examples, each R' is methyl.

In some examples, the diglycidyl ether may be a bisphenol diglycidyl ether, for example, bisphenol A diglycidyl ether or bisphenol F diglycidyl ether or a mixture thereof. In some examples, the diglycidyl ether is bisphenol A diglycidyl ether. In some examples, the epoxy resin is bisphenol A diglycidyl ether.

In some examples, the epoxy resin has a weight average molecular weight of up to about 1000 g/mol, for example, up to about 950 g/mol, up to about 900 g/mol, up to about 850 g/mol, up to about 800 g/mol, up to about 700 g/mol. In some examples, the epoxy resin epoxy resin has a molecular weight of from about 300 g/mol to about 1000 g/mol, for example, from about 300 g/mol to about 750 g/mol, or about 320 g/mol to about 700 g/mol.

The epoxy resin comprises a diglycidyl ether formed by the reaction of a diol with an epihalohydrin. In some examples, the epoxy resin is formed by the reaction of a diol with an epihalohydrin. The epihalohydrin is derived from renewable sources. As used herein, renewable sources refers to sources that are produced by natural processes at a rate comparable to their rate of consumption (e.g., within a 100 year time frame). Nonlimiting examples of renewable sources include plants, animals, fish, bacteria, and fungi. In some examples, the renewable source may be a plant product, such as a plant-based oil (e.g., sunflower oil, rapeseed oil, coconut oil/fat, palm oil, vegetable oil, or olive oil). In some examples, the renewable source may be animal fat. In some examples, the renewable source may be a naturally occurring organism, a selectively bread organism or a genetically engineered organism. Natural resources such as fossil fuels, crude oil, petroleum, natural gas, coal and peat are examples of non-renewable resources (i.e., sources that take longer than 100 years to form).

In some examples, the epoxy resin has a biobased carbon content of at least about 20 wt.%, for examples, at least about 21 wt.%, at least about 22 wt.%, at least about 23 wt.%, at least about 24 wt.%, at least about 25 wt.%, at least about 26 wt.%, at least about 27 wt.%, at least about 28 wt.%, at least about 29 wt.%, at least about 30 wt.%, at least about 31 wt.%, at least about 32 wt.%, at least about 33 wt.%, at least about 34 wt.%, or at least about 35 wt.%. In some examples, the epoxy resin has a biobased carbon content of up to about 45 wt.%, for example, up to about 44 wt.%, up to about 43 wt.%, up to about 42 wt.%, up to about 41 wt.%, up to about 40 wt.%, up to about 39 wt.%, up to about 38 wt.%, up to about 37 wt.%, up to about 36 wt.%, or up to about 35 wt.%. In some examples, the epoxy resin has a biobased carbon content of from about 20 wt.% to about 45 wt.%, for example, about 21 wt.% to about 44 wt.%, about 22 wt.% to about 43 wt.%, about 23 wt.% to about 42 wt.%, about 24 wt.% to about 41 wt.%, about 25 wt.% to about 40 wt.%, about 26 wt.% to about 39 wt.%, about 27 wt.% to about 38 wt.%, about 28 wt.% to about 37 wt.%, about 29 wt.% to about 36 wt.%, or about 30 wt.% to about 35 wt.%.

The biobased carbon content may refer to the amount of biobased carbon in the material as a percentage of the weight of the total organic carbon in the product (i.e., the epoxy resin). The biobased carbon content may be determined according to ASTM 6866. This test method discriminates between products resulting from contemporary carbon input and carbon derived from fossil-based carbon input. The method measures a product's ¹⁴C/¹²C or ¹⁴C/¹³C content relative to a carbon based modern reference material accepted by the radiocarbon dating community.

In some examples, the epoxy resin has an epoxy equivalent weight of at least about 100 g/mol, for example, at least about 105 g/mol, at least about 110 g/mol, at least about 115 g/mol, at least about 120 g/mol, at least about 125 g/mol, at least about 130 g/mol, at least about 135 g/mol, at least about 140 g/mol, at least about 145 g/mol, at least about 155 g/mol, at least about 160 g/mol, at least about 165 g/mol, at least about 170 g/mol, at least about 175 g/mol, or at least about 180 g/mol. In some examples, the epoxy resin has an epoxy equivalent weight of up to about 500 g/mol, for example, up to about 500 g/mol, up to about 475 g/mol, up to about 450 g/mol, up to about 425 g/mol, up to about 400 g/mol, up to about 375 g/mol, up to about 350 g/mol, up to about 325 g/mol, up to about 300 g/mol, up to about 275 g/mol, up to about 250 g/mol, up to about 245 g/mol, up to about 240 g/mol, up to about 235 g/mol, up to about 230 g/mol, up to about 225 g/mol, up to about 220 g/mol, up to about 215 g/mol, up to about 210 g/mol, up to about 205 g/mol, or up to about 200 g/mol. In some examples, the epoxy resin has an epoxy equivalent weight of from about 100 g/mol to about 500 g/mol, for example, about 110 g/mol to about 490 g/mol, about 120 g/mol to about 480 g/mol, about 130 g/mol to about 470 g/mol, about 140 g/mol to about 460 g/mol, about 150 g/mol to about 450 g/mol, about 160 g/mol to about 440 g/mol, about 170 g/mol to about 430 g/mol, about 180 g/mol to about 420 g/mol, about 190 g/mol to about 410 g/mol, about 200 g/mol to about 400 g/mol, about 210 g/mol to about 390 g/mol, about 220 g/mol to about 380 g/mol, about 230 g/mol to about 370 g/mol, about 240 g/mol to about 360 g/mol, about 250 g/mol to about 350 g/mol, about 260 g/mol to about 340 g/mol, about 270 g/mol to about 330 g/mol, about 280 g/mol to about 320 g/mol, about 290 g/mol to about 310 g/mol, or about 300 g/mol to about 310 g/mol. The epoxy equivalent weight may be the number of grams of epoxy resin required to provide 1 mole of epoxy groups. In some examples, the epoxy equivalent weight may be determined by following the method described in ISO 3001:1999.

In some examples, the epoxy resin may have an epoxy index of at least about 2 mol/kg, for example, at least about 2.5 mol/kg, at least about 3 mol/kg, at least about 3.5 mol/kg, at least about 4 mol/kg, at least about 4.5 mol/kg, at least about 5 mol/kg, at least about 5.1 mol/kg, or at least about 5.2 mol/kg. In some examples, the epoxy resin may have an epoxy index of up to about 10 mol/kg, for example, up to about 8.5 mol/kg, up to about 8 mol/kg, up to about 7.5 mol/kg, up to about 7 mol/kg, up to about 6.5 mol/kg, up to about 6 mol/kg, up to about 5.9 mol/kg, up to about 5.8 mol/kg, up to about 5.7 mol/kg, up to about 5.6 mol/kg, or up to about 5.5 mol/kg. In some examples, the epoxy resin may have an epoxy index of from about 2 mol/kg to about 10 mol/kg, for example, about 2.5 mol/kg to about 9.5 mol/kg, about 3 mol/kg to about 9 mol/kg, about 3.5 mol/kg to about 8.5 mol/kg, about 4 mol/kg to about 8 mol/kg, about 4.5 mol/kg to about 7.5 mol/kg, about 5 mol/kg to about 7 mol/kg, about 5.1 mol/kg to about 6 mol/kg, or about 5.2 mol/kg to about 4.5 mol/kg. The epoxy index provides a measure of the number moles of epoxy groups in 1 kg of epoxy resin. In some examples, the epoxy index may be determined by following the method described in ISO 3001:1999. The epoxy index is similar to the epoxy value, which provides a measure of the number of moles of epoxy groups in 100 g of epoxy resin.

### Diol

The diglycidyl ether may be formed by the reaction of any diol with an epihalohydrin. In some examples, the diol may be an aliphatic diol, an aromatic diol, or a combination thereof. In some examples, the diol may be a low molecular weight diol (e.g., with a weight average molecular weight of less than 500) or a polymeric diol.

In some examples, the diol is selected from alkyldiols, aryldiols, alkaryldiols, aralkyldiols, aryl-alkyl-aryl diols and combinations thereof. In some examples, the diol may be a bisphenol, for example, bisphenol A, bisphenol F or a mixture thereof. In some examples, the diol is bisphenol A. In some examples, the diol is any diol that produces an epoxy resin of the type described herein (e.g., as shown in formulae (I) or (II)) when reacted with an epihalohydrin.

### Epihalohydrin

The epihalohydrin may be any epihalohydrin derived from renewable sources. In some examples, the epihalohydrin is selected from epichlorohydrin, epibromohydrin, epiiodohydrin or a combination thereof. Preferably, the epihalohydrin is epichlorohydrin.

In some examples, the epihalohydrin may be derived from glycerol. In some examples, the glycerol may be derived from plant, animal, fish, bacteria or fungi. In some examples, the glycerol may be derived from plant sources, for example, a plant-based oil, such as rapeseed oil, coconut fat, olive oil, palm oil and sunflower oil, or from animal sources, such as animal fats.

In some examples, the epihalohydrin has a biobased carbon content of 100%.

### Curing agent

In some examples, the curing agent may be any compound capable of reacting with the epoxy resin to form a cured epoxy resin. In some examples, the curing agent comprises an amine-containing compound (such as alkylamine compounds, cycloaliphatic amine compounds and aromatic amines), an anhydride-containing compound, a polyamide-containing compound, a phenalkamine-containing compound, or a combination thereof. In some examples, the curing agent is an alkylamine compound, a cycloaliphatic amine compound or an aromatic amine. In some examples, the curing agent may be a polyamide, for example, a poly(amidoamine) or a poly(amidoimidazoline)amine.

In some examples, the curing agent may comprise or be an amide producible from the reaction of a multifunctional amine with a carboxylic acid. In some examples, the multifunctional amine may comprise two, three, four, five, or six amine groups. In some examples, the carboxylic acid may be a fatty acid (e.g., an aliphatic carboxylic acid containing 4 to 28 carbon atoms, for example, 10 to 28 carbon atoms, or 15 to 20 carbon atoms). In some examples, the multifunctional amine may be selected from diethylenetriamine, triethylenetetramine, or pentaethylenehexamine. In some examples, the multifunctional amine is triethylenetetramine. In some examples, the curing agent may be the reaction product of triethylenetetramine with a C15 to C20 fatty acid.

In some examples, the curing agent may comprise or be a poly(amidoimidazoline)amine.

In some examples, the curing agent may be a poly(amidoimidazoline)amine.

In some examples, the curing agent may have an amine number of at least about 300 mgKOH/g, for example, at least about 310 mgKOH/g, at least about 320 mgKOH/g, at least about mgKOH/g, at least about mgKOH/g, at least about mgKOH/g, at least about mgKOH/g, or at least about 370 mgKOH/g. In some examples, the curing agent may have an amine number of up to about 500 mgKOH/g, for example, up to about mgKOH/g, up to about 480 mgKOH/g, up to about 470 mgKOH/g, up to about 460 mgKOH/g, up to about 450 mgKOH/g, up to about 440 mgKOH/g, up to about 430 mgKOH/g, up to about 420 mgKOH/g, or up to about 410 mgKOH/g. In some examples, the curing agent may have an amine number of from about 300 mgKOH/g to about 500 mgKOH/g, for example, from about 310 mgKOH/g to about 490 mgKOH/g, about 320 mgKOH/g to about 490 mgKOH/g, about 330 mgKOH/g to about 480 mgKOH/g, about 340 mgKOH/g to about 470 mgKOH/g, about 350 mgKOH/g to about 460 mgKOH/g, about 360 mgKOH/g to about 450 mgKOH/g, about 370 mgKOH/g to about 440 mgKOH/g, about 370 mgKOH/g to about 430 mgKOH/g, about 370 mgKOH/g to about 420 mgKOH/g, or about 370 mgKOH/g to about 410 mgKOH/g. In some examples, the amine number may be measured by following the procedure described in DIN 16945.

In some examples, the curing agent may be derived from renewable sources. In some examples, the curing agent may be at least partially derived from renewable sources. In some examples, the curing agent comprises the reaction product of an amine with a fatty acid, wherein the fatty acid is derived from renewable sources. In some examples, the fatty acid may have a bio-based carbon content of 100%.

### Base filter medium

In some examples, the filter medium comprises any base filter medium that is capable of being impregnated with an epoxy resin. In some examples, the base filter medium comprises a fibrous layer. In some examples, the fibrous layer comprises a nonwoven layer. In some examples, the base filter medium comprises a paper substrate, a spunbond nonwoven layer, a melt-blown nonwoven layer or a combination thereof. In some examples, the base filter medium comprises a paper substrate.

The base filter medium may comprise or consist of cellulose fibres. In some examples, the base filter medium may comprise or consist of cellulose fibres and synthetic fibres. In some examples, the synthetic fibres may be selected from polymeric fibres and inorganic fibres. In some examples, the base filter medium may comprise or consist of synthetic fibres (e.g., polymeric fibres or inorganic fibres).

In some examples, the polymeric fibres may comprise a material selected from a polyester, a polycarbonate, a polyamide, a polyaramid, a polyimide, a polyolefin, a polyether ether ketone, a polyolefin, a polyacrylic, a polyvinyl alcohol, a polyacrylonitrile, a polyvinylidene fluoride (PVDF), polylactic acid (PLA), silicone, polyether sulfone, copolymers thereof, or combinations thereof. The polyester may be selected from polyethylene terephthalate, polybutylene terephthalate or a combination thereof. The polyamide may be a nylon. The polyolefin may be selected from polyethylene, polypropylene or a combination thereof. In some examples, the polymeric fibres may be selected from polyester fibres, polyacrylic fibres or combinations thereof. In some examples, the polymeric fibres may comprise polyester fibres. In some examples, the polymeric fibres may be polyethylene terephthalate fibres.

In some examples, the inorganic fibres may comprise a material selected from glass, carbon, ceramic, silica or a combination thereof. In some examples, the inorganic fibres may comprise or consist of glass fibres.

In some examples, the base filter medium may comprise at least about 30 wt.% cellulose fibres, for example, at least about 35 wt.%, at least about 40 wt.%, at least about 45 wt.%, at least about 50 wt.%, at least about 55 wt.%, at least about 60 wt.%, at least about 65 wt.%, at least about 70 wt.%, at least about 75 wt.%, at least about 80 wt.%, at least about 85 wt.%, at least about 90 wt.%, or at least about 95 wt.% cellulose fibres. In some examples, the base filter medium may comprise up to about 100 wt.% cellulose fibres, for example, up to about 95 wt.%, up to about 90 wt.%, up to about 85 wt.%, up to about 80 wt.%, up to about 75 wt.%, up to about 70 wt.%, up to about 65 wt.%, up to about 60 wt.%, up to about 55 wt.%, up to about 50 wt.%, up to about 45 wt.%, up to about 40 wt.%, up to about 35 wt.%, or up to about 30 wt.% cellulose fibres. In some examples, the base filter medium may comprise from about 30 wt.% to about 100 wt.% cellulose fibres, for example, about 35 wt.% to about 100 wt.%, about 40 wt.% to about 95 wt.%, about 45 wt.% to about 90 wt.%, about 50 wt.% to about 85 wt.%, about 55 wt.% to about 80 wt.%, about 60 wt.% to about 75 wt.%, or about 65 wt.% to about 70 wt.% cellulose fibres.

In some examples, the base filter medium may comprise up to about 100 wt.% synthetic fibres, for example, up to about 70 wt.%, up to about 65 wt.%, up to about 60 wt.%, up to about 55 wt.%, up to about 50 wt.%, up to about 45 wt.%, up to about 40 wt.%, up to about 35 wt.%, up to about 30 wt.%, up to about 25 wt.%, up to about 20 wt.%, or up to about 15 wt.% synthetic fibres. In some examples, the base filter medium may comprise from about 0 wt.% to about 100 wt.% synthetic fibres, for example, about 0 wt.% to about 70 wt.%, about 5 wt.% to about 70 wt.%, about 10 wt.% to about 65 wt.%, about 15 wt.% to about 60 wt.%, about 20 wt.% to about 55 wt.%, about 25 wt.% to about 50 wt.%, about 30 wt.% to about 45 wt.%, or about 35 wt.% to about 40 wt.% synthetic fibres.

In some examples, the base filter medium may comprise up to about 100 wt.% inorganic fibres (e.g., glass fibres). In some examples, the base filter medium may comprise up to about 50 wt.% inorganic fibres (e.g., glass fibres), for example, up to about 25 wt.% inorganic fibres. In some examples, the base filter medium may comprise from about 15 wt.% to about 50 wt.% inorganic fibres (e.g., glass fibres), for example, about 15 wt.% to about 25 wt.% inorganic fibres.

In some examples, the base filter medium may comprise up to about 50 wt.% inorganic fibres (e.g., glass fibres) and up to about 20 wt.% polymeric fibres. In some examples, the remainder may be cellulose fibres. In some examples, the base filter medium may comprise about 15 wt.% to about 50 wt.%, for example, about 15 wt.% to about 25 wt.% inorganic fibres (e.g., glass fibres) and up to about 20 wt.% polymer fibres (e.g., polyester fibres). In some examples, the base filter medium may comprise cellulose fibres and polymer fibres, for example, up to about 50 wt.% polymer fibres (e.g., about 15 wt.% to about 30 wt.% polymer fibres).

In some examples, the cellulose fibres may comprise only one or multiple different types of cellulose fibre (which can also be fibrillated), for example, a combination of hardwood fibres and softwood fibres. In some examples, the cellulose fibres comprise only one type of cellulose fibre. In some examples, the cellulose fibres comprise multiple different types of cellulose fibre, for example, a combination of hardwood fibres and softwood fibres. In some examples, the cellulose fibres may be fibrillated. The softwood fibres may be derived from pine (e.g., longleaf pine, shortleaf pine, loblolly pine, slash pine, or Southern pine), Jack pine, balsam fir, Douglas fir, western hemlock, redwood, red cedar, northern softwood, southern softwood, hemlock, spruce (e.g., black spruce or white spruce). The softwood fibres may be from a Northern Bleached Softwood kraft (NBSK) pulp. The hardwood fibres may be derived from aspen, birch, beech, oak, maple, eucalyptus or gum.

The relative proportion of softwood and hardwood fibres, respectively, can be selected so that the proportion (based on weight) of softwood fibres is higher than the proportion of hardwood fibres). The relative weight to weight proportions of softwood fibres and hardwood fibres may be 85:15 to 60:40, for example, 80:20 to 65:35.

### Filtration Device

In a further aspect, there is provided a filtration device. The filtration device comprises any filter medium described herein. In some examples, the filtration device may comprise a corrugated filter medium. The corrugated filter medium may comprise or consist of any filter medium described herein that has been corrugated.

In some examples, the filtration device may comprise a filter medium disposed within a frame. The frame may ensure that the filter medium maintains a particular shape during use of the filtration device.

The filtration device may be an air filtration device, a gas filtration device, a liquid filtration device, or an industrial filtration device. In some examples, the liquid filtration device may be a lube oil filtration device, an oil filtration device, a fuel filtration device or a hydraulic filtration device. In some examples, the air filtration device may be a cabin air filtration device (e.g., for automotive applications), or an HVAC filtration device. In some examples, the air filtration device may be an air intake filtration device for automotive applications.

In another aspect, there is provided an air intake filtration device for automotive air filtration. The air intake filtration device for automotive air filtration may comprise a filter medium and/or a filtration device of the type described herein.

### Method of producing a filter medium

In another aspect, there is provided a method of producing a filter medium. The method of producing a filter medium comprises impregnating a base filter medium with an epoxy resin and a curing agent; and reacting the epoxy resin with the curing agent to form a cured epoxy resin, wherein the epoxy resin comprises a diglycidyl ether formed by the reaction of a diol with an epihalohydrin; and wherein the epihalohydrin is derived from renewable sources.

In some examples, the base filter medium is impregnated with the epoxy resin and the curing agent by contacting the base filter medium with an impregnation composition. The impregnation composition may comprise the epoxy resin and the curing agent. In some examples, the impregnation composition may additionally comprise a solvent, for example, an alcohol solvent (e.g., methanol), acetone or water. In some examples, the impregnation composition may comprise additional additives, for example, additives to modify the physical properties of the filter medium, such as hydrophobicity agents, hydrophilicity agents, accelerator agents, dye pigments, reactive diluents and similar.

In some examples, the method may comprise combining the epoxy resin, the curing agent, and a solvent (and optionally the additionally additive or additives) to form an impregnation composition and contacting the base filter medium with the impregnation composition. In some examples, the method may comprise combining the epoxy resin with a solvent and then adding the curing agent to form the impregnation composition and then contacting the base filter medium with the impregnation composition. In some examples, the method may comprise combining the curing agent with a solvent and then adding the epoxy resin to form the impregnation composition and then contacting the base filter medium with the impregnation composition.

In some examples, the impregnation composition may comprise at least about 50 wt.% solvent, for example, at least about 55 wt.%, at least about 60 wt.%, at least about 65 wt.%, at least about 70 wt.% solvent, at least about 75 wt.%, at least about 80 wt.% solvent. In some examples, the impregnation composition may comprise up to about 95 wt.% solvent, for example, up to about 90 wt.%, up to about 85 wt.%, up to about 80 wt.%, up to about 75 wt.%, up to about 70 wt.%, up to about 65 wt.%, up to about 60 wt.% up to about 55 wt.% solvent. In some examples, the impregnation composition may comprise from about 50 wt.% to about 95 wt.% solvent, for example, about 55 wt.% to 95 wt.% solvent, for example, about 60 wt.% to about 90 wt.%, about 65 wt.% to about 85 wt.%, about 70 wt.% to about 75 wt.% solvent.

In some examples, the impregnation composition may comprise up to about 40 wt.% non-volatile solids (e.g., a combination of the epoxy resin and the curing agent), for example, up to about 35 wt.%, up to about 30 wt.%, up to about 25 wt.%, up to about 20 wt.%, up to about 15 wt.%, up to about 10 wt.%, up to about 5 wt.% NVS. In some examples, the impregnation composition may comprise at least about 5 wt.% NVS, for example, at least about 10 wt.%, about 15 wt.%, about 20 wt.%, about 25 wt.%, about 30 wt.%, about 35 wt.%, or about 40 wt.% NVS. In some examples, the impregnation composition may comprise from about 5 wt.% to about 40 wt.% NVS, for example, about 10 wt.% to about 35 wt.%, about 15 wt.% to about 30 wt.%, about 20 wt.% to about 25 wt.% NVS.

In some examples, the ratio of epoxy resin to curing agent is calculated such that the ratio of epoxide functional groups in the epoxy resin to the reactive groups in the curing agent (e.g., amine functional groups or amide functional groups) is from about 1.5:1 to about 1:1.5, for example, about 1.4:1 to about 1:1.4, about 1.3:1 to about 1:1.3, about 1.2:1 to about 1:1.2, about 1.2:1 to about 1:1.

In some examples, the impregnation composition may be contacted with the base filter medium by any suitable process. In some examples, the impregnation composition may be contacted with the base filter medium by roller coating (e.g., kiss coating or double kiss coating), curtain coating, gravure coating, flexography coating, offset coating, reverse offset coating or a combination thereof. In some examples, the impregnation composition is contacted with the base filter medium from both surfaces of the base filter medium simultaneously or sequentially. In some examples, the impregnation composition is contacted with the base filter medium by roller coating. In some examples, the impregnation composition is contacted with the base filter medium by double kiss coating.

In some examples, the base filter medium comprises a first surface and a second surface, the first surface opposing the second surface. In some examples, one surface of the base filter medium is impregnated with the impregnation composition. In some examples, both surfaces of the base filter medium are impregnated with the impregnation composition. In some examples, the method comprises impregnating the base filter medium on both surfaces (i.e., the first surface and the second surface) by contacting both surfaces of the base filter medium with the impregnation composition. In some examples, the cured epoxy resin impregnates the full thickness of the base filter medium. In some examples, the cured epoxy resin impregnates one or both surfaces of the base filter medium but has not penetrated into the center of the base filter medium.

In some examples, the method may comprise impregnating the base filter medium symmetrically or asymmetrically. As used herein, asymmetrically impregnating the base filter medium may refer to impregnating the base filter medium with two different impregnation compositions. In some examples, impregnating the base filter medium may comprise impregnating a first surface of the base filter medium with a first impregnation composition, and impregnating a second surface of the base filter medium with a second impregnation composition. In some examples, the first impregnation composition may comprise an impregnation composition of the type described herein. In some examples, both the first impregnation composition and the second impregnation composition may comprise an impregnation composition of the type described herein. In some examples, the first impregnation composition may be the same as or different from the second impregnation composition. In some examples, the first impregnation composition may be different from the second impregnation composition and the first impregnation composition and the second impregnation composition may both be impregnation compositions of the type described herein (that is, they may differ in, for example, concentration of the epoxy resin and/or the curing agent; in the chemical structure of the epoxy resin and/or of the curing agent; and/or in the additives included in the impregnation composition). In some examples, only one of the impregnation compositions (e.g., the first impregnation composition) is an impregnation composition of the type described herein.

In some examples, at least one of the two impregnation compositions penetrates the base filter medium by at least half and at most three quarters of the thickness thereof. In some examples, each of the impregnation compositions penetrates the base filter medium by at least half and at most three quarters of the thickness thereof. In some examples, the impregnation composition penetrates the full thickness of the base filter medium.

The method further comprises reacting the epoxy resin with the curing agent to form the cured epoxy resin. In some examples, the epoxy resin reacts with the curing agent at room temperature (for example, from about 20°C to 25°C). In some examples, reacting the epoxy resin with the curing agent comprises removing the solvent from the impregnation composition. In some examples, the method comprises impregnating the base filter medium with an impregnation composition (comprising an epoxy resin, a curing agent, a solvent, and optionally an additional additive or additives) and inducing reaction of the epoxy resin with the curing agent, for example, by removing the solvent, to form a cured epoxy resin. In some examples, the cured epoxy resin comprises a cross-linked matrix of the epoxy resin and the curing agent. In some examples, inducing reaction of the epoxy resin with the curing agent may comprise heating. In some examples, heating may accelerate the reaction of the epoxy resin with the curing agent.

In some examples, the method of producing a filter medium comprises impregnating a base filter medium with an impregnation composition to form a base filter medium impregnated with the impregnation composition; drying the base filter medium impregnated with the impregnation composition to remove the solvent; and reacting the epoxy resin with the curing agent to form a cured epoxy resin. In some examples, drying the base filter medium impregnated with the impregnation composition comprises heating. In some examples, drying the base filter medium impregnated with the impregnation composition accelerates the reaction of the epoxy resin with the curing agent to form the cured epoxy resin. In some examples, drying the base filter medium impregnated with the impregnation composition comprises heating to a temperature of up to 150°C, for example, up to about 140°C, up to about 130°C, up to about 120°C. In some examples, drying the base filter medium impregnated with the impregnation composition comprises heating to a temperature of from about 50°C to about 150°C, for example, about 100°C to about 120°C. In some examples, drying the base filter medium impregnated with the impregnation composition induces or accelerates the reaction of the epoxy resin with the curing agent.

In some examples, the method may further comprise reacting the diol with the epihalohydrin to form the epoxy resin. In some examples, the method of producing a filter medium comprises reacting a diol with an epihalohydrin to form an epoxy resin and impregnating a base filter medium with the epoxy resin and a curing agent; and reacting the epoxy resin with the curing agent to form a cured epoxy resin, wherein the epoxy resin comprises a diglycidyl ether formed by the reaction of a diol with an epihalohydrin; and wherein the epihalohydrin is derived from renewable sources. In some examples, the method may comprise reacting a diol with an epihalohydrin to form an epoxy resin; combining the epoxy resin, a curing agent and a solvent (and optionally an additive or additives) to form an impregnation composition and impregnating a base filter medium with the impregnation composition; and reacting the epoxy resin with the curing agent to form a cured epoxy resin impregnated into the base filter medium.

In some examples, the method may further comprise producing an epihalohydrin from a renewable source, reacting the epihalohydrin with a diol to form an epoxy resin; impregnating a base filter medium with the epoxy resin and a curing agent; and reacting the epoxy resin with the curing agent to form a cured epoxy resin. In some examples, the method may comprise producing an epihalohydrin from a renewable source, reacting the epihalohydrin with a diol to form an epoxy resin, combining the epoxy resin, a curing agent and a solvent (and optionally an additive or additives) to form an impregnation composition; impregnating a base filter medium with the impregnation composition; and reacting the epoxy resin with the curing agent to form a cured epoxy resin.

In some examples, the epihalohydrin may be produced from any suitable renewable source. In some examples, the epihalohydrin may be produced from a plant product, such as rapeseed oil, coconut oil/fat, olive oil, palm oil or sunflower oil, or from an animal product such as animal fat.

### EXAMPLES

The following illustrates examples of the methods and other aspects described herein. Thus, these Examples should not be considered as limitations of the present disclosure, but are merely in place to teach how to make examples of the present disclosure.

### Materials

### Epoxy resin

EnviPOXY^{®} 520: a bisphenol A diglycidyl ether epoxy resin produced from renewable epichlorohydrin and bisphenol A with an epoxy index of 5.21-5.5 mol/kg and an epoxy equivalent weight of 182-192 g/mol; available from Spolchemie^{®}. EnviPOXY^{®} 520 has a maximum renewable content of 33.5 wt.% and a biobased carbon content of approximately 28 wt.% (as determined by ASTM 6866).

### Curing agents

Polyamido amine: the product of reacting a C18 fatty acid with triethylenetetramine with an amine number of 300-500 mgKOH/g.

Poly(amidoimidazoline)amine: a poly(amidoimidazoline)amine with an amine number of 300-500 mgKOH/g (typically 390 mgKOH/g) and an imidazoline content of 54 wt.%. The Poly(amidoimidazoline)amine has a biobased carbon content of 75 wt.% (as determined by ASTM D6866-22 Method B (AMS) TOC).

### Solvent

### Methanol

### Base filter medium

A 100% cellulose (mainly pine tree) substrate with a basis weight of 100 g/m² and a thickness of 0.6 mm was used.

### Example 1

An impregnation composition was produced by combining 10 wt.% EnviPOXY^{®} 520, 6.6 wt.% polyamido amine and 83 wt.% methanol. The impregnation composition was contacted with the base filter medium by a double kiss coating process. The base filter medium impregnated with the impregnation composition was heated to 120°C to remove the methanol and cure the epoxy resin. A filter medium impregnated with 20 wt.% cured epoxy resin was produced.

### Example 2

An impregnation composition was produced by combining 10 wt.% EnviPOXY^{®} 520, 6.6 wt.% poly(amidoimidazoline)amine and 83 wt.% methanol. The impregnation composition was contacted with the base filter medium by a double kiss coating process. The base filter medium impregnated with the impregnation composition was heated to 120°C to remove the methanol and cure the epoxy resin. A filter medium impregnated with 20 wt.% cured epoxy resin was produced.

### Summary

Impregnating the filter media with an impregnation composition formed from an epoxy resin derived from renewably sourced epichlorohydrin reduces the CO₂ emissions by from 25 to 30% for each filter medium produced. The physical properties of the filter media according to Examples 1 and 2 are shown in Table 1 :

| Table 1 | | Example 1 | Example 2 |
|---|---|---|---|
| Resin content | % | 19.10 | 19.80 |
| Burstinq strength⁽¹⁾ | kPa | 468.00 | 505.00 |
| Air permeability⁽²⁾ | l/m²s | 901.00 | 903.00 |
| Width related bending stiffness (15°, dry, MD)⁽³⁾ | cNmm | 369.12 | 407.55 |
| Width related bending stiffness (15°, dry, CD)⁽³⁾ | cNmm | 193.86 | 182.11 |
| Width related bending stiffness (15°, wet, MD)⁽³⁾ | cNmm | 41.12 | 41.86 |
| Width related bending stiffness (15°, wet, CD)⁽³⁾ | cNmm | 29.62 | 25.46 |
| Acetone extract 2h | -% | 0.60 | |
| Burstinq strength after 24h at 160°C⁽¹⁾ | kPa | 332.00 | 352.00 |

| | | | |
|---|---|---|---|
| (1) by Mullen (7.3 cm² test area); (2) at Δp 200 Pa; (3) 15 mm band size; MD: machine direction; CD: cross-direction. | | | |

While the invention has been described with reference to certain examples, those skilled in the art will appreciate that various modifications, changes, omissions, and substitutions can be made without departing from the spirit of the disclosure. It is intended, therefore, that the invention be limited by the scope of the following claims and their equivalents. Unless otherwise stated, the features of any dependent claim can be combined with the features of any of the other dependent claim and any of the independent claims.

## Claims

1. A filter medium comprising a base filter medium impregnated with a cured epoxy resin formed by the reaction of an epoxy resin with a curing agent, wherein the epoxy resin comprises a diglycidyl ether formed by the reaction of a diol with an epihalohydrin; and wherein at least the epihalohydrin is derived from renewable sources.

2. The filter medium according to claim 1, wherein the diol is bisphenol A, bisphenol F, or a mixture thereof.

3. The filter medium according to any preceding claim, wherein the epihalohydrin is epichlorohydrin.

4. The filter medium according to any preceding claim, wherein the epoxy resin comprises a biobased carbon content of at least about 20 wt.%

5. The filter medium according to any preceding claim, wherein the epoxy resin comprises a biobased carbon content of from about 25 wt.% to about 45 wt.%.

6. The filter medium according to any preceding claim, wherein the curing agent is selected from poly(amido amine) and poly(amidoimidazoline)amine.

7. The filter medium according to any preceding claim, wherein the base filter medium comprises a paper substrate.

8. The filter medium according to claim 7, wherein base filter medium comprises cellulose fibres.

9. The filter medium of any preceding claim, wherein the diglycidyl ether is bisphenol A diglycidyl ether, bisphenol F diglycidyl ether or a mixture thereof.

10. A filtration device comprising the filter medium of any preceding claim.

11. An air intake filtration device for automotive air filtration comprising a filter medium according to any of claims 1 to 9 or a filtration device according to claim 10.

12. A method of producing a filter medium comprising impregnating a base filter medium with an epoxy resin and a curing agent; and reacting the epoxy resin with the curing agent to form a cured epoxy resin, wherein the epoxy resin comprises a diglycidyl ether formed by the reaction of a diol with an epihalohydrin; and wherein the epihalohydrin is derived from renewable sources.

13. The method of claim 12, further comprising reacting the diol with the epihalohydrin to form the epoxy resin.

14. The method of claim 13, further comprising producing the epihalohydrin from rapeseed oil, coconut fat, olive oil, palm oil, sunflower oil or animal fat.

15. The method of any one of claims 12 to 14, comprising combining the epoxy resin, the curing agent and a solvent to form an impregnation composition and contacting the base filter medium with the impregnation composition.
